# FASCICULE DE BREVET EUROPEEN

(11) **EP 2 189 635 B1**
(45) Date de publication et mention de la délivrance du brevet: **14.12.2011**
(21) Numéro de dépôt: 09173474.9
(22) Date de dépôt: 20.10.2009
(51) Int. Cl.: F02B 31/06

(54) **Procédé et un dispositif de contrôle d'écoulement pour un moteur à combustion interne**
Verfahren und Vorrichtung zur Strömungskontrolle für einen Verbrennungsmotor
Flow control method and device for an internal combustion engine

(30) Priorité: 20.11.2008 FR 0857891
(43) Date de publication de la demande: 26.05.2010
(73) Titulaire: Peugeot Citroën Automobiles SA, 78140 Vélizy-Villacoublay (FR)
(72) Inventeur: Blokkeel, Grégory, 75016 Paris (FR)

(56) Documents cités:
- EP-A- 1 568 866
- EP-A- 1 632 660
- EP-A- 1 884 636
- FR-A- 2 877 044
- JP-A- 61 175 231

## Description

### Domaine technique de l'invention

L'invention concerne les moteurs à combustion interne, et plus particulièrement le contrôle de l'admission d'air.

### Arrière plan technologique

Les contraintes sur les normes européennes et internationales sur les émissions de polluants et de gaz à effet de serre devenant de plus en plus sévères, il est plus que jamais indispensable de rechercher de nouvelles voies pour limiter les émissions à la source des moteurs à combustion interne. Au coeur de cette problématique, le système de combustion et son environnement (aérodynamique, système d'injection...) doivent relever de nouveaux challenges en terme d'efficacité et de contrôle.

Dans le cas des moteurs à combustion interne, cette efficacité est fortement influencée par un meilleur contrôle de la préparation du mélange et des structures aérodynamiques de l'écoulement. La combustion, sa tolérance aux mélanges fortement dilués ou pauvres et la réduction des émissions à l'échappement se trouvent alors directement liées à la faculté de maîtriser ces processus.

Pour arriver à de tels résultats, il est connu de générer une forte turbulence dans les chambres de combustion. Pour ce faire on crée dans le cylindre moteur un mouvement tourbillonnaire dit de « tumble » dont l'axe de rotation principal est sensiblement perpendiculaire à celui du cylindre moteur.

De nombreux dispositifs ont été proposés pour créer cette forte turbulence, pour example le dispositif décrit par le document EP 1 632 660 A. Ainsi, le document FR2909716 décrit un moteur à combustion interne comprenant une tubulure d'admission d'air débouchant par un orifice dans une chambre de combustion. Un volet est placé dans cette tubulure d'admission d'air, dans une zone proche de l'orifice débouchant dans la chambre de combustion. En outre, dans une variante de réalisation, le volet peut être mobile et bascule autour d'un axe d'articulation sous l'effet d'un moyen de commande. Ainsi le volet peut basculer autour de l'axe d'articulation pour toutes les positions angulaires comprises entre deux positions extrêmes pour créer un mouvement tourbillonnaire de type « tumble » souhaité.

Un tel dispositif peut permettre d'adapter le niveau de « tumble » pour un point de fonctionnement moteur déterminé mais ne peut réaliser les ajustements nécessaires pour compenser les variations aérodynamiques de l'air admis d'un cycle moteur à un autre, pour ce même point de fonctionnement.

L'invention a pour but de pallier l'inconvénient précité en proposant un procédé et un dispositif de contrôle d'écoulement aptes à limiter les fluctuations aérodynamiques de l'air admis cycle à cycle.

L'invention concerne donc un procédé de contrôle d'écoulement d'un fluide d'admission pour un moteur à combustion interne, le moteur comportant au moins une tubulure d'admission dans laquelle est placé un élément mobile qui, en fonction de sa position, va modifier l'état d'écoulement du fluide, caractérisé en ce que l'on mesure une valeur caractéristique d'un effort exercé par le fluide sur l'élément mobile et que l'on modifie la position de l'élément mobile si l'effort effectivement exercé est différent de celui attendu pour un état d'écoulement de consigne. En effet, le fait de mesurer l'effort du fluide sur l'élément mobile permet d'obtenir une image fiable, des variations d'un état de l'écoulement tel que la vitesse ou la turbulence au niveau de l'élément mobile, ce qui permet d'effectuer ensuite un contrôle efficace de l'état d'écoulement par l'ajustement de la position de l'élément mobile.

Par ailleurs, l'invention peut comporter l'une ou plusieurs des caractéristiques suivantes :

Avantageusement, l'état d'écoulement de consigne est sélectionné en fonction de paramètres moteur choisis parmi au moins un des paramètres suivants : le régime moteur, la charge moteur. En effet, les besoins aérodynamiques sont variables en fonction du point de fonctionnement moteur.

Préférentiellement, la valeur caractéristique de l'effort exercé par le fluide d'admission est une déformation, une force ou une pression. En effet, l'effort exercé par le fluide sur l'élément mobile peut être aisément déduit de la mesure de ces grandeurs.

Avantageusement, la mesure de ladite valeur caractéristique et la modification de position sont réalisées au cours d'une même phase d'admission du fluide.

Avantageusement encore, la mesure de ladite valeur caractéristique et la modification de position de l'élément mobile, sont réalisées pendant la première moitié de la phase d'admission, pour avoir un meilleur contrôle sur l'état de l'écoulement pendant la phase d'admission.

Préférentiellement, la mesure de ladite valeur caractéristique et la modification de position sont réalisées au moins une fois pendant la même phase d'admission. Ce qui permet d'assurer un meilleur suivi et une correction de l'état de l'écoulement à différents moments au cours de l'admission de l'air.

L'invention a aussi pour objet un dispositif de contrôle d'écoulement d'un fluide d'admission d'un moteur à combustion interne pour la mise en oeuvre du procédé de l'invention, le moteur comportant au moins une tubulure d'admission dans laquelle est placé un élément mobile, un moyen de commande de la position de l'élément mobile, caractérisé en ce qu'il comprend des moyens de sélection d'un état d'écoulement de consigne, un moyen de mesure d'une valeur caractéristique d'un effort exercé par le fluide d'admission sur l'élément mobile, et des moyens de réglage de la position de l'élément mobile en fonction de la valeur caractéristique mesurée.

Le dispositif selon l'invention peut comporter l'une des caractéristiques suivantes :
- le moyen de mesure comprend une jauge de déformation.
- le moyen de mesure comprend un capteur de pression.
- le moyen de mesure comprend un capteur de force.

En effet, ces capteurs ont des temps de réponses aptes à suivre et mesurer les variations de l'effort exercé par le fluide sur l'élément mobile pendant l'admission de l'air.

Par ailleurs, le dispositif de l'invention peut comporter une ou plusieurs des caractéristiques suivantes :
- les moyens de sélection d'un état d'écoulement de consigne comportent une première cartographie contenant, en fonction de paramètres moteur choisis, différentes valeurs dudit état d'écoulement de consigne.
- les moyens de réglage comportent une seconde cartographie contenant, en fonction de paramètres moteur choisis, des consignes de position correspondants aux dits états d'écoulement de consigne, et sont aptes à sélectionner de la seconde cartographie la consigne de position, à déduire, en fonction de la mesure de la valeur caractéristique de l'effort exercé par le fluide d'admission sur l'élément mobile, un état d'écoulement mesuré et à modifier la consigne de position en fonction de l'écart entre l'état d'écoulement de consigne l'état d'écoulement mesuré.

- les paramètres de fonctionnement moteur sont choisis parmi au moins un des paramètres suivants : le régime moteur, la charge moteur.
- le moyen de commande est apte à modifier la position de l'élément mobile pour un régime moteur inférieur ou égal à 4000 tr/min. Au-delà de 4000 tr/min et avec les charges moteur demandées, il faut favoriser le remplissage. De plus, le régime moteur étant important, l'aérodynamique et la turbulence intrinsèque dans le cylindre sont suffisantes pour assurer une bonne reproductibilité de la combustion cycle à cycle d'un point de vue des instabilités liées aux variations aérodynamiques.

L'invention a aussi pour objet un moteur à combustion interne comprenant un dispositif de contrôle d'écoulement selon l'invention.

### Brève description des dessins

D'autres particularités et avantages apparaîtront à la lecture de la description ci-après d'un mode particulier de réalisation, non limitatif de l'invention, faite en référence à la figure unique dans laquelle :

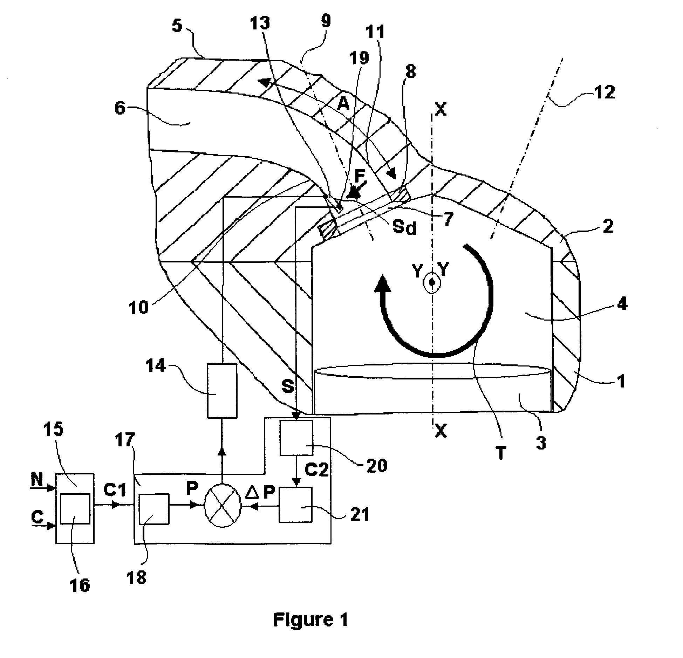

- La figure 1 est une représentation schématique partielle d'un moteur à combustion comportant un mode de réalisation du dispositif de l'invention et permettant la mise en oeuvre du procédé selon l'invention.

### Description détaillée

Sur la figure 1 est présenté un moteur à combustion interne comprenant au moins un cylindre 1 d'axe longitudinal XX, fermé en partie supérieure par une culasse 2. A l'intérieur de ce cylindre est logé un piston 3 qui permet de délimiter une chambre de combustion 4 formée par la paroi latérale du cylindre 1, la partie de la culasse 2 en regard du piston 3 ainsi que la partie supérieure dudit piston 3 et à l'intérieur de laquelle est admis un fluide pour réaliser la combustion d'un mélange carburé. Le moteur comprend également des moyens d'admission 5, généralement porté par la culasse 2, qui comprennent au moins une tubulure d'admission 6 débouchant par un orifice 7 dans la chambre de combustion 4. Au niveau de l'orifice 7 est placé en outre inséré dans la culasse 2, un siège de soupape 8 dont l'alésage central correspond à l'orifice 7 et qui est utilisé avec une soupape d'admission dont seul l'axe général 9 est représenté sur la figure 1 pour des raisons de clarté. La tubulure d'admission 6 présente une portion A de tubulure courbe. Cette portion comprend ainsi un intrados 10 proche du cylindre et un extrados 11 opposé à l'intrados.

De plus, le moteur comprend des moyens d'échappement, dont seul le trait d'axe général 12 est représenté sur la figure 1 pour des raisons de clarté, qui permettent d'évacuer les gaz brûlés contenus dans la chambre de combustion 4.

La tubulure d'admission 6 porte au niveau de son orifice 7, un élément mobile 13. Cet élément mobile 13 comprend une surface déflectrice Sd destinée à dévier l'écoulement du fluide d'admission. L'élément mobile 13 est proche de l'orifice 7 afin d'avoir un effet notable sur la déviation de l'écoulement.

L'élément mobile 13 est commandé en position par un moyen de commande 14. Le moyen de commande peut être un moteur du type pas à pas, ce qui permet d'amener et de maintenir l'élément mobile 13 à une consigne de position P.

Cet élément mobile 13 permet, suivant la position de la surface déflectrice Sd dans la tubulure d'admission 6, d'introduire le fluide d'admission dans la chambre de combustion 4 d'une manière telle que ce fluide ait un mouvement tourbillonnaire autour d'un axe de rotation principal YY qui est sensiblement perpendiculaire à l'axe XX du cylindre 1 du moteur. Ce mouvement tourbillonnaire, symbolisé par la flèche T sur la figure 1, est mieux connu par le terme « tumble ».

L'élément mobile 13 permet aussi, suivant la position de la surface déflectrice Sd dans la tubulure d'admission 6, aussi de favoriser le remplissage en air du cylindre 1 pendant la phase d'admission.

Le fluide admis dans la chambre de combustion 4 peut aussi bien être un air suralimenté ou non suralimenté introduit par la tubulure 6 pour y être ensuite mélangé avec un carburant qu'un mélange carburé à base carburant mélangé avec de l'air suralimenté ou non, éventuellement additionnés de gaz brûlés recirculés.

Le dispositif de contrôle de l'écoulement selon l'invention comprend aussi un moyen de sélection 15 d'un état d'écoulement de consigne C1. Avantageusement, le moyen de sélection 15 comporte d'une première cartographie 16 contenant, en fonction de paramètres de fonctionnement moteur, différentes valeurs dudit état d'écoulement de consigne C1. Les paramètres de fonctionnement moteur peuvent être choisis parmi au moins, au moins, le régime moteur N, la charge moteur C.

Une telle première cartographie 16 est déterminée préalablement, par exemple, à partir d'essais sur banc moteur ou par calcul de modélisation. Les besoins aérodynamiques peuvent être, en fonction des paramètres de fonctionnement moteur choisis, par exemple une intensité déterminée de « tumble » ou encore un remplissage du cylindre 1. En effet le tumble est favorable à bas régime tel qu'un régime de ralenti pour intensifier la turbulence de l'écoulement dans le cylindre 1 et améliorer la combustion tandis que l'on cherche à haut régime, par exemple au-delà de 3000 tr/min, à favoriser le remplissage du cylindre 1 en air dans le but d'augmenter la puissance du moteur.

Le dispositif de contrôle de l'écoulement selon l'invention comporte par ailleurs des moyens de réglage 17 de la position de l'élément mobile 13. Les moyens de réglage 17 comportent une seconde cartographie 18 contenant, pour des paramètres de fonctionnement moteur choisis parmi au moins, au moins, le régime moteur N, la charge moteur C, des consignes de position P correspondants aux dites états d'écoulement de consignes C1.

La consigne C1 sert de première donnée d'entrée aux moyens de réglage 17 qui sont aptes à sélectionner de la seconde cartographie 18, la consigne de position P.

L'ensemble des éléments du dispositif de contrôle décrits jusqu'ici, permettent d'adapter l'état de l'écoulement, autrement dit son aérodynamique, admis dans le cylindre 1 en fonction des paramètres moteurs choisis.

Un moteur à combustion interne, fonctionne classiquement selon un cycle moteur dont le plus connu comporte quatre temps ou phases : admission, compression, détente et échappement. Il est connu par ailleurs d'avoir, en fonction des paramètres moteurs tels qu'un régime moteur et/ ou une charge moteur établi, des fluctuations de performances entre chaque cycle moteur. Ces fluctuations sont notamment dues au fait que l'air admis dans le cylindre 1, par nature turbulent, a des caractéristiques dynamiques (vitesse, intensité de turbulence) variable d'un cycle moteur à un autre. Ainsi en limitant ces fluctuations aérodynamiques, on contribue à améliorer la stabilité de fonctionnement du moteur.

Afin de faire une correction dite cycle à cycle, c'est-à-dire modifier l'état de d'écoulement du fluide admis à chaque cycle moteur, en vue de limiter les fluctuations aérodynamiques d'un cycle moteur à un autre, conformément à l'invention, le dispositif comprend un moyen de mesure 19 d'une valeur caractéristique d'un effort F exercé par le fluide d'admission sur l'élément mobile 13.

Par mesure d'une valeur caractéristique d'un effort F, on entend la mesure d'une valeur ayant une relation mathématique avec l'effort F.

Avantageusement, le moyen de mesure 19 comprend d'une jauge de déformation appliquée sur l'élément mobile 13. Ainsi, un effort F exercé par l'écoulement sur l'élément mobile 13 induit une déformation de la jauge de déformation qui fournit la valeur caractéristique S. Cette valeur caractéristique S sert de seconde donnée d'entrée aux moyens de réglage 17.

Les moyens de réglage 17 sont aptes à déduire par un premier moyen de calcul 20, à partir de la mesure de la valeur caractéristique S de l'effort F exercé par l'écoulement du fluide d'admission sur l'élément mobile 13, et par l'intermédiaire par exemple d'une relation de Bernoulli, un état d'écoulement C2 mesuré.

Un second moyen de calcul 21 détermine alors, à partir d'un écart entre l'état d'écoulement C2 mesuré et l'état d'écoulement de consigne C1 une compensation de position ΔP. Enfin, la consigne de position P, corrigée par la compensation de position ΔP, est appliquée au moyen de commande 14 pour modifier la position de l'élément mobile 13 en conséquence.

De préférence le moyen de commande 14 est apte à ajuster la position de l'élément mobile 13 pour un régime moteur N inférieur ou égal à 4000 tr/min. Au delà de ce régime moteur, il est n'est pas utile de corriger la position de l'élément mobile 13 à chaque cycle moteur, pendant la phase d'admission.

Ainsi, pour un point de fonctionnement à régime moteur N et charge moteur C donné, le moyen de réglage 17 commande une première fois le moyen de commande 14 pour positionner l'élément mobile 13 à la position définie P à partir de la consigne C1 aérodynamique. Ce positionnement peut s'effectuer à un moment du cycle moteur autre que la phase d'admission. La mesure de l'effort F est réalisée, quant à elle, pendant la phase d'admission et précède la modification de position de l'élément mobile 13. Suite à la mesure de l'effort F, la compensation de position ΔP est déterminée et le moyen de réglage 17 commande une seconde fois le moyen de commande 14 pour positionner l'élément mobile 13 à la position P corrigée.

La modification de position de l'élément mobile 13 est réalisée, suite à la mesure de l'effort F exercé par l'écoulement du fluide d'admission sur l'élément mobile 13, de préférence au cours d'une même phase d'admission d'une cycle moteur et, plus précisément encore, de préférence pendant la première moitié de cette la phase d'admission, ce qui permet d'avoir une action de correction efficace sur l'aérodynamique du fluide admis.

Un tel dispositif a pour avantage d'autoriser un changement rapide d'aérodynamique. En effet, le temps de réponse d'un tel dispositif est de l'ordre de la durée d'un cycle moteur.

De plus, sur les points de fonctionnement moteur à fort régime et/ forte charge, on cherche à favoriser le remplissage en air au détriment du mouvement aérodynamique, alors que cette situation s'inverse pour les points de fonctionnement moteur à plus faible régime et/ou faible charge. Dans leur conception traditionnelle, le dessin des tubulures d'admission 6 d'admission est fixe. Il résulte donc d'un compromis entre un premier dessin qui favoriserait le mouvement aérodynamique et un second dessin qui favoriserait le remplissage. Un tel dispositif selon l'invention a pour avantage de permettre de s'affranchir de ce compromis aérodynamique / remplissage, car la position de l'élément mobile peut être adaptée selon une cartographie prédéfinie et ainsi modifier à volonté le niveau aérodynamique et/ou remplissage afin d'optimiser le fonctionnement du moteur sur un point de régime/charge donné.

L'invention a pour avantage supplémentaire, en limitant les fluctuations aérodynamiques du fluide admis dans le moteur, de d'améliorer la stabilité de la combustion ultérieure.

Ce mode de réalisation décrit en figure 1 n'est aucunement limitatif. Selon une variante du dispositif de l'invention, non représentée, le moyen de mesure 19 peut comprendre un capteur de pression ou un capteur de force, ou tout autre capteur susceptible d'être sensible à une grandeur physique corrélée à d'un effort F du fluide exercé sur l'élément mobile 13. Tel est le cas, par exemple de la pression qui est le rapport d'un effort par une surface.

Dans une variante non représentée, on réalise, avantageusement, la mesure de l'effort F et la modification de position P associée de l'élément mobile 13 au moins une fois par cycle moteur, pendant la phase d'admission, pour s'assurer d'un meilleur suivi et contrôle des variations d'état de l'écoulement du fluide pendant la phase d'admission.

## Revendications

1. Procédé de contrôle d'écoulement d'un fluide d'admission pour un moteur à combustion interne, le moteur comportant au moins une tubulure (6) d'admission dans laquelle est placé un élément mobile (13) qui, en fonction de sa position, va modifier l'état d'écoulement du fluide, **caractérisé en ce que** l'on mesure une valeur caractéristique d'un effort (F) exercé par le fluide sur l'élément mobile (13) et que l'on modifie la position (P) de l'élément mobile (13) si l'effort effectivement exercé est différent de celui attendu pour un état d'écoulement de consigne (C1).

2. Procédé de contrôle selon la revendication 1, **caractérisé en ce que** l'état d'écoulement de consigne (C1) est sélectionné en fonction de paramètres moteur choisis parmi au moins un des paramètres suivants : le régime moteur (N), la charge moteur (C).

3. Procédé de contrôle selon la revendication 1 ou la revendication 2, **caractérisé en ce que** la valeur caractéristique de l'effort (F) exercé par le fluide d'admission est une déformation, une force ou une pression.

4. Procédé de contrôle selon l'une quelconque des revendications précédentes, **caractérisé en ce que** la mesure de ladite valeur caractéristique et la modification de position (P) sont réalisées au cours d'une même phase d'admission du fluide.

5. Procédé de contrôle selon la revendication 4, **caractérisé en ce que** la mesure de ladite valeur caractéristique et la modification de position de l'élément mobile (13) sont réalisées pendant la première moitié de la phase d'admission.

6. Procédé de contrôle selon la revendication 4 ou la revendication 5, **caractérisé en ce que** la mesure de ladite valeur caractéristique et la modification de position (P) sont réalisées au moins une fois pendant la même phase d'admission.

7. Dispositif de contrôle d'écoulement d'un fluide d'admission d'un moteur à combustion interne pour la mise en oeuvre du procédé selon l'une quelconque des revendications précédentes, le moteur comportant au moins une tubulure (6) d'admission dans laquelle est placé un élément mobile (13), un moyen de commande (14) de la position (P) de l'élément mobile (13), **caractérisé en ce qu'**il comprend des moyens de sélection (15) d'un état d'écoulement de consigne (C1), un moyen de mesure (19) d'une valeur caractéristique d'un effort (F) exercé par le fluide d'admission sur l'élément mobile (13), et des moyens de réglage (17) de la position de l'élément mobile (13) en fonction de la valeur caractéristique mesurée.

8. Dispositif de contrôle d'écoulement selon la revendication 7, **caractérisé en ce que** le moyen de mesure (19) comprend une jauge de déformation.

9. Dispositif de contrôle d'écoulement selon la revendication 7, **caractérisé en ce que** le moyen de mesure (19) comprend un capteur de pression.

10. Dispositif de contrôle d'écoulement selon la revendication 7, **caractérisé en ce que** le moyen de mesure (19) comprend un capteur de force.

11. Dispositif de contrôle d'écoulement selon l'une quelconque des revendications 7 à 10, **caractérisé en ce que** les moyens de sélection (15) d'un état d'écoulement de consigne (C1) comportent une première cartographie (16) contenant, en fonction de paramètres moteur choisis, différentes valeurs dudit état d'écoulement de consigne (C1).

12. Dispositif de contrôle d'écoulement l'une quelconque des revendications 7 à 11, **caractérisé en ce que** les moyens de réglage (17) comportent une seconde cartographie (18) contenant, en fonction de paramètres moteur choisis, des consignes de position (P) correspondants aux dits états d'écoulement de consigne (C1), et sont aptes à sélectionner de la seconde cartographie (18) la consigne de position (P), à déduire, en fonction de la mesure de la valeur caractéristique de l'effort (F) exercé par le fluide d'admission sur l'élément mobile (13), un état d'écoulement mesuré (C2) et à modifier la consigne de position (P) en fonction de l'écart entre l'état d'écoulement de consigne (C1) l'état d'écoulement (C2) mesuré.

13. Dispositif de contrôle d'écoulement selon la revendication 11 ou la revendication 12, **caractérisé en ce que** les paramètres de fonctionnement moteur sont choisis parmi au moins un des paramètres suivants : le régime moteur (N), la charge moteur (C).

14. Dispositif de contrôle d'écoulement selon l'une quelconque des revendications 7 à 13, **caractérisé en ce que** le moyen de commande (14) est apte à modifier la position (P) de l'élément mobile (13) pour un régime moteur (N) inférieur ou égal à 4000 tr/min.

15. Moteur à combustion interne comprenant un dispositif de contrôle d'écoulement selon l'une quelconque des revendications 7 à 14.

## Claims

1. A method for monitoring the flow of an inlet fluid for an internal combustion engine, wherein the engine comprises at least one inlet pipe (6) in which is located a movable element (13) that modifies the state of flow of the fluid depending on its position, **characterized in that** a characteristic value of a force (F) exerted by the fluid on the movable element (13) is measured and that the position (P) of the movable element (13) is changed if the force effectively exerted differs from what is expected for a nominal state of flow (C1).

2. The monitoring method as recited in claim 1, **characterized in that** the nominal state of flow (C1) is selected on the basis of engine parameters selected from among the following parameters: engine speed (N), engine load (C).

3. The monitoring method as recited in claim 1 or 2, **characterized in that** the characteristic value of force (F) exerted by the inlet fluid is a strain, a force of pressure.

4. The monitoring method as recited in any of the preceding claims, **characterized in that** the characteristic value and the change in position (P) are effected in the course of the same fluid inlet phase.

5. The monitoring method as recited in claim 4, **characterized in that** the measurement of the characteristic value and the change in position of the element (13) are effected during the first half of the inlet phase.

6. The monitoring method as recited in claim 4 or claim 5, **characterized in that** the measurement of the characteristic value and the change in position (P) are effected at least once during the same inlet phase.

7. A device for monitoring the flow of an inlet fluid of an internal combustion engine for implementing a method according to any of the preceding claims, wherein the engine comprises at least one inlet pipe (6) in which is located a movable element (13), a control means (14) for controlling the position (P) of the element (13), **characterized in that** it includes a selection means (15) for selecting a nominal state of flow (C1), a measurement means (19) for measuring a characteristic value of a force (F) exerted by the inlet fluid on the movable element (13), and adjustment means (17) for adjusting the position of the movable element (13) depending on the characteristic value measured.

8. The flow monitoring device as recited in claim 7, **characterized in that** the measurement means (19) includes a strain gauge.

9. The flow monitoring device as recited in claim 7, **characterized in that** the measurement means (19) includes a pressure gauge.

10. The flow monitoring device as recited in claim 7, **characterized in that** the measurement means (19) includes a force sensor.

11. The flow monitoring device as recited in any of claims 7 to 10, **characterized in that** the selection means (15) of a nominal state of flow (C1) includes a first mapping (16) containing different values for said nominal state of flow (C1) depending on the engine parameters chosen.

12. The flow monitoring device as recited in any of claims 7 to 11, **characterized in that** the adjustment means (17) includes a second mapping (18) containing setpoints for position (P) corresponding to said nominal states of flow (C1) depending on the engine parameters chosen, and are able to select the position setpoint (P) from the second mapping (18), to deduce a measured state of flow (C2) on the basis of the measurement of the characteristic value of the force (F) exerted on the movable element (13) by the inlet fluid, and to modify the setpoint for position (P) on the basis of the difference between the nominal state of flow (C1) and the measured state of flow (C2).

13. The flow monitoring device as recited in claim 11 or claim 12, **characterized in that** the engine operating parameters are chosen from among at least the following parameters: engine speed (N), engine load (C).

14. The flow monitoring device as recited in any of claims 7 to 13, **characterized in that** the control means (14) is able to change the position (P) of the movable element (13) for an engine speed (N) equal to or lower than 4000 rpm.

15. An internal combustion engine including a flowing monitoring device as recited in any of claims 7 to 14.

## Patentansprüche

1. Verfahren zum Steuern des Abfließens einer Einlassflüssigkeit für einen Verbrennungsmotor, wobei der Motor mindestens einen Einlassrohrstutzen (6) aufweist, in dem ein bewegliches Element (13) platziert ist, das in Abhängigkeit von seiner Position den Abfließzustand der Flüssigkeit ändert, **dadurch gekennzeichnet, dass** man einen charakteristischen Wert einer Kraft (F), die von der Flüssigkeit auf das bewegliche Element (13) ausgeübt wird, misst, und dass man die Position (P) des beweglichen Elements (13) ändert, wenn die effektiv ausgeübte Kraft anders ist als die für einen Sollabfließzustand (C1) erwartete.

2. Steuerverfahren nach Anspruch 1, **dadurch gekennzeichnet, dass** der Sollabfließzustand (C1) in Abhängigkeit von Motorparametern ausgewählt wird, die mindestens einem der folgenden Parameter entsprechen: Motordrehzahl (N), Motorlast (C).

3. Steuerverfahren nach Anspruch 1 oder Anspruch 2, **dadurch gekennzeichnet, dass** der charakteristische Wert der Kraft (F), die von der Einlassflüssigkeit ausgeübt wird, eine Verformung, eine Kraft oder ein Druck ist.

4. Steuerverfahren nach einem der vorhergehenden Ansprüche, **dadurch gekennzeichnet, dass** die Messung des charakteristischen Werts und die Änderung der Position (P) im Laufe einer gleichen Einlassphase der Flüssigkeit ausgeführt werden.

5. Steuerverfahren nach Anspruch 4, **dadurch gekennzeichnet, dass** die Messung des charakteristischen Werts und die Änderung der Position des beweglichen Elements (13) während der ersten Hälfte der Einsatzphase ausgeführt werden.

6. Steuerverfahren nach Anspruch 4 oder Anspruch 5, **dadurch gekennzeichnet, dass** die Messung des charakteristischen Werts und die Änderung der Position (P) mindestens einmal während der gleichen Einlassphase ausgeführt werden.

7. Vorrichtung zum Steuern des Abfließens einer Einlassflüssigkeit eines Verbrennungsmotors zum Umsetzen des Verfahrens nach einem der vorhergehenden Ansprüche, wobei der Motor mindestens einen Einlassrohrstutzen (6) aufweist, in dem ein bewegliches Element (13), ein Steuermittel (14) der Position (P) des beweglichen Elements (13), untergebracht sind, **dadurch gekennzeichnet, dass** sie Mittel (15) zum Auswählen eines Sollabfließzustands (C1), ein Mittel (19) zum Messen eines charakteristischen Werts einer Kraft (F), die von der Einlassflüssigkeit auf das bewegliche Element (13) ausgeübt wird, und Mittel (17) zum Einstellen der Position des beweglichen Elements (13) in Abhängigkeit von dem gemessenen charakteristischen Wert aufweist.

8. Abfließsteuervorrichtung nach Anspruch 7, **dadurch gekennzeichnet, dass** das Messmittel (19) ein Dehnungsmessgerät aufweist.

9. Vorrichtung zum Steuern des Abfließens nach Anspruch 7, **dadurch gekennzeichnet, dass** das Messmittel (19) einen Drucksensor aufweist.

10. Vorrichtung zum Steuern des Abfließens nach Anspruch 7, **dadurch gekennzeichnet, dass** das Messmittel (19) einen Kraftsensor aufweist.

11. Vorrichtung zum Steuern des Abfließens nach einem der Ansprüche 7 bis 10, **dadurch gekennzeichnet, dass** die Mittel (15) zum Auswählen eines Sollabfließzustands (C1) eine erste Kartographie (16) enthalten, die in Abhängigkeit von den ausgewählten Motorparametern unterschiedliche Werte des Sollabfließzustands (C1) enthält.

12. Vorrichtung zum Steuern des Abfließens nach einem der Ansprüche 7 bis 11, **dadurch gekennzeichnet, dass** die Einstellmittel (17) eine zweite Kartographie (18) enthalten, die in Abhängigkeit von den ausgewählten Motorparametern Positionssollwerte (P) enthält, die Sollabfließzuständen (C1) entsprechen und aus der zweiten Kartographie (18) den Positionssollwert (P) auswählen, in Abhängigkeit von der Messung des charakteristischen Werts der Kraft (F), die von der Einlassflüssigkeit auf das bewegliche Element (13) ausgeübt wird, einen gemessenen Abfließzustand (C2) ableiten und den Positionssollwert (P) in Abhängigkeit von dem Unterschied zwischen dem Sollabfließwert (C1) und dem gemessenen Abfließzustand (C2) ändern können.

13. Vorrichtung zum Steuern des Abfließens nach Anspruch 11 oder Anspruch 12, **dadurch gekennzeichnet, dass** die Motorbetriebsparameter mindestens einem der folgenden Parameter entsprechen: Motordrehzahl (N), Motorlast (C).

14. Vorrichtung zum Steuern des Abfließens nach einem der Ansprüche 7 bis 13, **dadurch gekennzeichnet, dass** das Steuermittel (14) die Position (P) des beweglichen Elements (13) für eine Motordrehzahl (N) kleiner oder gleich 4000 U/Min. ändern kann.

15. Verbrennungsmotor mit einer Vorrichtung zum Steuern des Abfließens nach einem der Ansprüche 7 bis 14.
